(19) Europäisches Patentamt
European Patent Office
Office européen des brevets

(11) **EP 1 143 062 B1**

(12) **EUROPEAN PATENT SPECIFICATION**

(45) Date of publication and mention
of the grant of the patent:
**13.11.2002   Bulletin 2002/46**

(51) Int Cl.$^7$: **D06N 3/12**, D06M 15/643,
B32B 27/12, A41D 31/02

(21) Application number: **00105102.8**

(22) Date of filing: **10.03.2000**

(54) **Soil resistant cleanable clothing**

Reinigbare schmutzabweisende Bekleidung

Vêtement nettoyable résistant aux salissures

(84) Designated Contracting States:
**AT BE CH CY DE DK ES FI FR GB GR IE IT LI LU
MC NL PT SE**

(43) Date of publication of application:
**10.10.2001   Bulletin 2001/41**

(73) Proprietor: **W.L. GORE & ASSOCIATES GmbH
85640 Putzbrunn (DE)**

(72) Inventors:
• **Schwarz, Stephan
  84499 Parsdorf (DE)**
• **Matusche, Peter
  81827 München (DE)**
• **Stübinger, Werner
  85579 Neubiberg (DE)**

(74) Representative: **Hirsch, Peter, Dipl.-Ing.
Klunker Schmitt-Nilson Hirsch
Winzererstrasse 106
80797 München (DE)**

(56) References cited:
**WO-A-89/08553          WO-A-99/46118**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

## BACKGROUND OF THE INVENTION

Fabrics for clothing that resist soiling or that render the clothing easily cleanable are in demand. New and better means for making soil resistant clothing or for making it difficult for soil to penetrate clothing fabric is desirable.

WO-A-89/08553 discloses a flexible porous web such as a fabric made of yarns wherein some of the fibres of the yarns are encapsulated by a silicone coating which does not completely fill the interstices between the fibres. This may result in an enhanced water and oil repellency of the individual fiber or filament but it does not prevent soil and stain from penetrating into the intersticial spaces between the fibers of the yarn from where soil and stain can not or not easily be removed.

In addition, it is desirable for outdoor clothing to be water-vapor-permeable to allow removal of perspiration vapor.

Durable soil repellency has been a long-sought goal. For instance, a continuous coating on the top of the textile with a polymer, for example silicone or polyurethane, may provide durable soil repellency with regard to water-soluble staining, but not with regard to greasy and oily stains. In addition, in some cases the materials lack air permeability and so provide poor comfort.

In this invention, both goals - soil resistance and water-vapor-permeability - are achieved. Workwear that is highly visible, for example by having warning colors, is used worldwide to signal the user's presence in hazardous situations visually under any light conditions. In the European Union, the user may be required by law to wear warning clothing conforming to EN471 (fluorescent orange, fluorescent yellow and fluorescent red). Typical work environments include roadwork, railroads or trash disposal. This clothing frequently becomes soiled in the course of this work, reducing the luminance of the colors and hence the signaling effect of the clothing. Consequently, the wearer of such clothing may in certain circumstances not be spotted in time in hazardous situations, endangering his or her health. If, after soiling, the color norm of EN471 is no longer achieved, the clothing may no longer be worn for that reason.

The present invention overcomes the deficiencies described above.

## SUMMARY OF THE INVENTION

The present invention provides clothing as described in claim 1. Embodiments of the invention are described in the dependent claims.

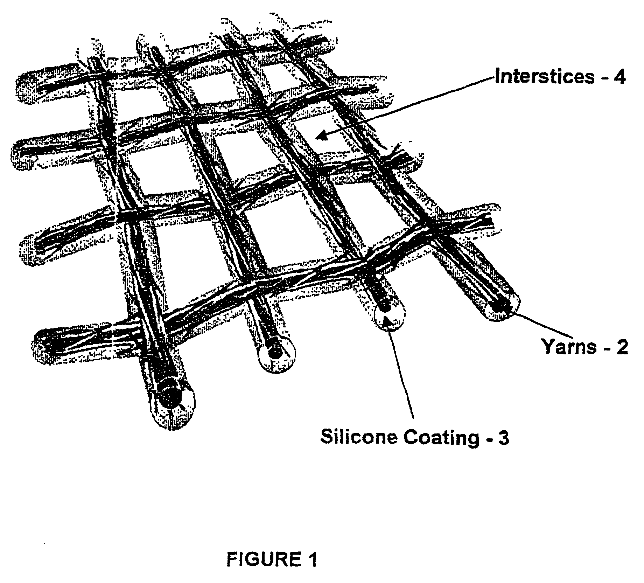

This invention describes a fabric for clothing in which the fabric is comprised of yarn and the yarn is coated with a coating that substantially completely encloses the yarn which is comprised of fiber bundles which are made up of many filaments, and so prevents soil penetrating and lodging between the filaments. This arrangement also prevents the absorption of oily soil components by the fiber material. To ensure air permeability, the fabrics chosen have spaces or interstices, as shown as 4 in Fig. 1, between the yarn which remain open even after coating. The coating encloses not only the yarn, but also the crossing points of the yarn, and thus enhances the stability of the fabric.

More particularly, in one embodiment, the invention is clothing comprising an outer fabric comprised of yarn in which the yarns are substantially entirely coated with silicone, but in which the silicone does not completely fill the interstices between the yarns, leading to openings in between the coated fibres with a width of 100-1000 mm, preferably 150-250 µm, leading to an air permeability (ISO 9237) of more than 500 l/m$^2$/s.

## BRIEF DESCRIPTION OF THE DRAWINGS

Fig. 1 depicts a coated fabric of the invention.
Fig. 2 depicts the coating process used in the invention.
Fig. 3 depicts silicone bumps or dots on a background functional layer.

## DETAILED DESCRIPTION OF THE INVENTION

This invention describes a fabric with soil resistance as a result of combined soil repellency and soil release properties.

Soil repellency means that the soil or stain does not adhere to the fabric, soil release means that the soil or stain is easily removed from the fabric by a cleaning method, e.g. washing.

As shown in Fig. 1, typical fabrics consist of yarns 2 which in themselves are bundles of fibres or filaments. When the fabric is stained, e.g. with a grease (mixture of oil and pigments) the stain can be deposited in various areas. The pigments can rest on top of the fibres, in between the fibres or between yarns at crossing points. The oil can be in the same areas and can also dissolute in the bulk of the fibres. It is nearly impossible to remove this stain by a standard washing procedure when it is trapped in between fibres (mechanically anchored) or in the bulk of the fibres.

In this invention the fiber bundles (yarns) are coated with a silicone (shown as 3 in Fig. 1), that penetrates between the bundles, ensuring mechanical attachment of the coating. The surface of the yarns is completely covered by the silicone, shown as 3 in Fig. 1, as well as the crossing points of the yarns. Thus, oil or pigment cannot penetrate between the bundles so the soil repellency is improved. Due to the smoothness of the surface of the coating, any stain being deposited there can be easily washed off during laundry, meaning good soil release properties.

The linear density of the yarns used is preferably between 80 dtex and 300 dtex before coating.

The silicone coating may additionally contain one or several additives. The additives used may be reflective agents, mildew-resistant agents, hand-altering agents, viscosity agents, rheology agents, flexibility agents, ultraviolet absorbers, filling agents, electrical conductive agents, thermal conductive agents, flame retardants and radiation reflectivity agents.

The fabric of this invention is constructed in such a way that even after coating there are openings between the yarns that improve the comfort of the wearer as the moisture can be transported from the body to the outside. These openings need to be larger than 100 µm to ensure an air permeability of at least 500 l/m$^2$/s (measured by ISO 9237). Smaller openings as being described in U. S.-A- 5,846,604 do have a low air permeability and will also lead to reduced soil release features, as the washing bath does not easily flow through small openings and cannot pick up all the stain.

When a color standard of the clothing like EN 471 is needed the color of a background material behind the described fabric is also very important, as it is seen through the openings. With a dark background the color values of EN 471, especially the luminance, often cannot be reached. The background material can also be a textile or fabric material.

With a very heavy soiling, especially when the stain is pressed through the fabric, the background material can be stained, too. Thereby the overall soil resistance of the clothing is reduced. To overcome this problem the background material can be printed with a soil resistant material like silicone, e.g. in a dot or grid pattern. This will improve the soil repellency of the background material and also provides a gap between the coated fabric and the background material, making it more difficult to stain the latter. The pattern does also protect the background material from mechanical harm, e.g. abrasion. This is especially important when the background material consists of a functional layer like a water-vapor-permeable membrane with windproof and/ or liquid waterproof characteristics as described below.

The coated, colored fabric can be prepared by treating the uncoated textile by classic textile dyeing methods. The subsequent coating with a transparent silicone has little if any effect on the color, so that the color continues to meet the color norm. On the other hand, it is also possible to use an undyed textile if appropriate dyes are added to the silicone prior to coating. The two methods of coloration may also be combined, for example, to achieve higher color brilliance.

As well as soil resistance, the silicone coating described also possesses water-repellent properties. The latter are also responsible for a very low water regain by the textile. The above-mentioned effects survive even repeated washing (domestic wash to ISO 6330 and industrial washes [standard under development at present]). Accordingly, a long use life is ensured for the clothing.

Example of a soil resist fabric:

a) raw materials:

The fabric is made of yarn and is preferably a woven or a knit. The yarns can be polyolefins, polyamides, polyesters, regenerated cellulose, cellulose acetate, rayons, acetates, acrylics, aramids, glasses, modacrylics, cotton, wool, silk, linen, jute, and mixtures thereof.

To treat the textile with silicone, an uncoated textile is used. In a preferred material, the uncoated weight of the textile is about 80 g/m$^2$. The yarn preferably comprises a polyester or polyamide which is non-texturized, but has a twist level of about 600 turns/m. The amount of silicone applied is about 100 g/m$^2$, depending on its degree of penetration into the textile. The remaining openings have a diameter of about 150 µm.

The silicones used can be of the RTV-Type, LSR-Type or mixtures thereof. These silicones consist of two parts which are mixed before use.

The curing process of the RTV (room temperature vulcanisation) silicones starts at the point of mixing at room temperature, but it accelerates with increasing temperature. A good curing temperature is between 120 and 180 °C.

LSR (liquid silicon rubber) silicones need a high temperature, that means between 160 and 200 °C, for curing.

The curing time is dependent on the silicone film thickness, the line speed, the length of the heating area and the selected temperature of the heating area.

b) processing:

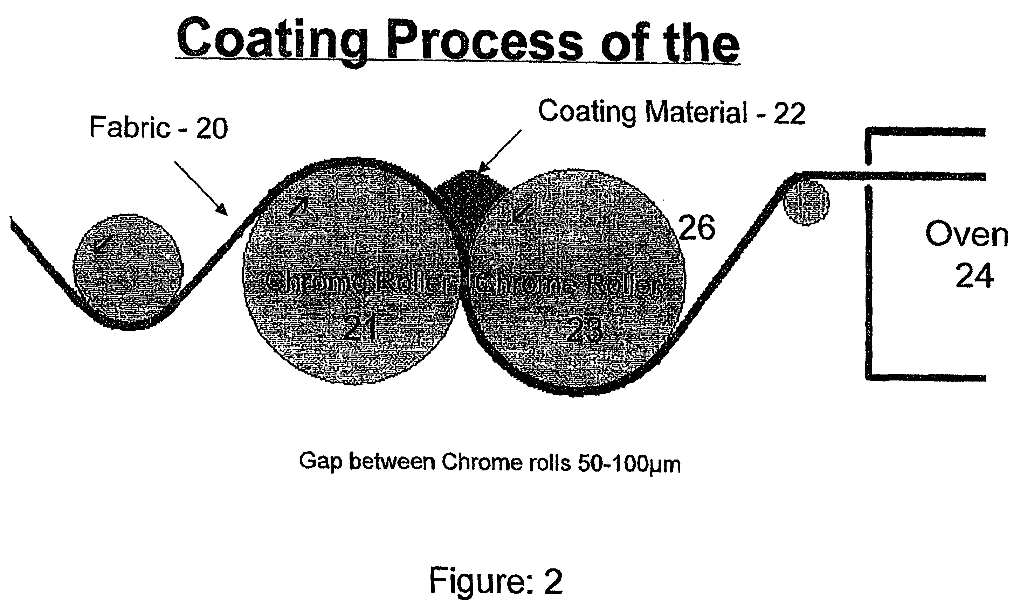

A process for producing the textile coating is depicted in Fig. 2 as follows:

Fabric 20 runs over roller 21 and goes through the coating solution 22 which is situated between chrome rollers 21 and 23 before passing under roller 23. The gap between the rollers is about 50 - 100 µm. Any extra solution, which is then between the yarns, will remain on the rollers at region 26, leaving the spaces between the yarns open. The curing process takes place in oven 24.

c) properties:

On such a fabric, soil stays on the smooth surface and does not penetrate into the filaments. Domestic washing at 40-95°C to ISO 6330 or industrial washing is then easily able to remove this soil, ensuring the values for the color norm of EN471, if required, can be adhered to. The firm attachment of the silicone to the textile ensures that the good soil resistance will exist even after 30 or more domestic wash cycles to ISO 6330. The color norm values, if needed, are maintained even in the case of multiple soiling (soil applied ten times to the same spot) with subsequent washing.

Air permeability is maintained by using a textile having yarn spacings of about 200 μm, leading to openings of about 150 μm after the coating has been applied. It is thus possible to measure an air permeability of more than 1000 l/m$^2$/s.

The coated textile is water repellent because of the fact that the silicone used is hydrophobic. Owing to the textile being completely sheathed with a silicone layer, it is thus durably protected against water and cannot become saturated either.

One method to determine the water repellency properties of textile structures with a rain test is the Bundesmann test (ISO 9865). The rain unit creates a rain defined by water volume, drop size and distance of rain unit to test samples. The test runs 10 minutes before the water repellency is checked by reference pictures and descriptions. The ratings range between 1 (poor) and 5 (good water repellency). After that the weight gain (water pickup of the fabric) is measured (in % related to the sample before the Bundesmann rain test).

In our example the water repellency after a ten minute Bundesmann shower (ISO 9865) scored a rating of 3 even after 30 domestic wash cycles, and the subsequently measured weight gain was less than 15%.

d) other textile properties:

Owing to the use of silicone as coating material and of a textile comprising multifilament yarns, the coated material has a soft hand. It is extremely flexible and offers high rebound elasticity in the diagonal direction in particular.

It possesses high thermal stability and does not become harsh or brittle even at extremely low temperatures. The good heat resistance is observable when worn by someone who is angle-grinding steel in that the shower of sparks (at a distance of 30 cm from the textile/time 30 s) will burn holes in an uncoated polyester fabric, but does not cause any damage to the coated material.

Combination with functional layers:

The coated textile can be combined with a water-vapor-permeable membrane background material to provide windproof characteristics and/or liquid waterproof characteristics. By combining the coated textile part with a water-vapor-permeable and windproof functional layer, the comfort provided by the clothing part can be further increased in outdoor applications. The purpose of these properties is to maintain the work capacity of the wearer and ensure physical comfort. The water-vapour-permeation can be measured by the FIH-BPI 1.4 (Forschungsinstitut Hohenstein - Bundesprufinstitut) test method.

This test specification describes a simple procedure by means of the cup method which permits the determination of the water vapour resistance of textiles. Hereby the fabric is arranged between a water surface and a measuring cup filled with a saturated salt solution. Special PTFE membranes (liquid waterproof, but at the same time well permeable to water vapour) are arranged at both sides of the sample and ensure that the sample is neither wicked by water nor by the salt solution. The partial pressure difference existing between the two sides of the samples causes the water vapour to pass through the sample from the water surface into the measuring cup. Its increase in mass during a defined measuring period permits the water vapour resistance of the sample to be determined. In order to be considered as water-vapor-permeable, the material should generally have a water-vapor-permeability of at least 1000, preferably greater than 1500 and more preferably greater than 3000 g/m$^2$/day, and can be over 15,000 g/m$^2$/24h.

The air permeability of the fabric combined with a background layer is measured to

10 l/m$^2$/s.

The combination of the type of functional layer described above with the soil resistant fabric provides a clothing which offers good comfort and facilitates soil removal. By combining the coated fabric with a water-vapor-permeable and waterproof functional layer, the resulting clothing may also be worn when it is raining and so protect the wearer against wetness

A suitable water-resistant water-vapor-permeable flexible membrane for use herein is disclosed in US-A-3,953,566 which discloses a porous expanded polytetrafluoroethylene (PTFE) material. The expanded porous PTFE has a micro-structure characterized by nodes interconnected by fibrils. If desired, the water resistance may be enhanced by coating the expanded PTFE with a hydrophobic and/or oleophobic coating material.

The water-resistant water-vapor-permeable membrane might also be a microporous material such as a high molecular weight microporous polyethylene or polypropylene, microporous polyurethanes or polyesters, or a hydrophilic monolithic polymer such as a polyurethane.

A windproof film or membrane can also be used.

Clothing parts used at present usually only provide individual properties. For instance, clothing parts comprising coated base materials (e.g., polyurethane coatings) offer water repellency, waterproofness and windproofness, but they sometimes are substantially water-vapor-impermeable, so that there is a buildup of humidity in the clothing part. In addition, the initially good soil resistance decreases after a few washes, since some of such coatings become rough and brittle. Clothing parts containing waterproof, windproof and water-vapor-permeable inner layers (e.g., films and membranes) generally offer good wear comfort. The outer materials, however, are textile fabrics (wovens, for example) which, when provided with hydrophobic finishes (usually based on fluorocarbons), lose their water repellency after just a few washes. In addition, these outer materials offer soil repellency only with regard to water-soluble soil. Oily and greasy soil in particular will contaminate even materials which have been given a hydrophobic finish. In cases where the color standard EN 471 is needed the protective effect of the warning color with regard to the wearer/user will then be lost. This contamination is impossible to remove completely by washing.

The clothing can be in the form of pants, jackets, hat or gloves or the like.

The invention described herein, in contrast, provides virtually complete removal of the soil by washing. The wearer is thus protected against wetness by the inner functional layer, while the outer functional layer provides durable protection against hazards with its signaling effect, since washing will restore its luminance even after repeated heavy soiling.

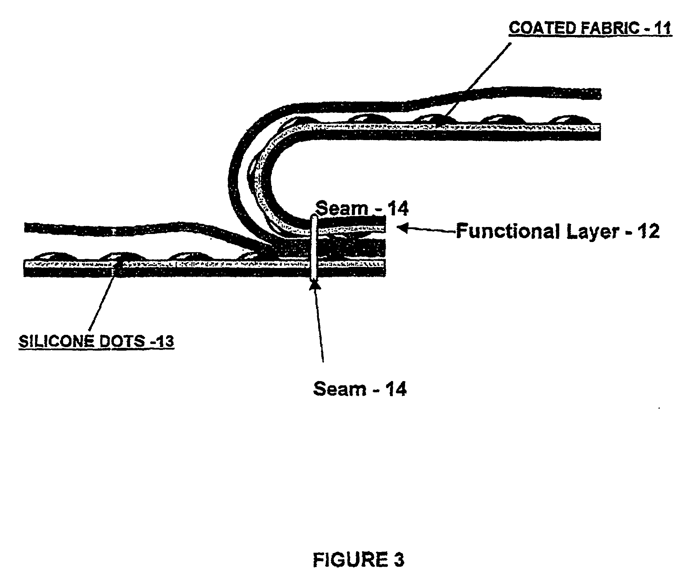

To prepare a clothing or clothing part, the coated textile and the functional material can be separate parts of the clothing, or the functional material can be attached to the coated fabric. In the latter instance, attachment may be by sewing the fabric with the functional material at each seam (Figure 3).

Insulation and added waterproof properties can be provided by the construction of Fig. 3 where the coated fabric is 11, the functional layer is 12, and silicone dots 13 separate the layers. Fig. 3 depicts two pieces seamed together at seam 14.

**TEST PROCEDURE**

Air Permeability

To measure the air permeability of a textile, a test machine which can measure the air flow through the textile is used. The samples are placed between two rings which results in a test area of 100 cm$^2$. Air is sucked through the sample with a constant pressure of 100 Pa. Hereby the amount of air coming through the sample is measure and calculated in l/m$^2$/s.

Evaluation of Soil Resistance

Swatches of sample material are sewn onto jackets in the lower back region. Grease (buffer grease, part no. 2292 from Fuchs Lubritech GmbH, Weilerbach, Germany) is then applied using a template of 130 μm thickness with two holes each 2 cm in diameter. To ensure a flat surface, a 6 mm thick plastic sheet is placed under the jacket.

About 2 g of grease are spread across the two holes in the template. The template is then carefully lifted off. Blotting paper is applied over the grease, followed by a plastic film on top. A wooden spatula is then pulled over the plastic under moderate pressure. The plastic film is then removed and the blotting paper peeled off.

The coated sample is aged for about 18 hours. A standard domestic 60°C wash in an Electrolux washing machine according to ISO 6330/3A, E is carried out with ECE detergent. The load is two jackets. Weight is about 2.2 kg.

The jacket is then tumbled in a dryer at about 70°C for 30 minutes.

Luminance and chromaticity of soiled and unsoiled jackets are measured with a Minolta CM 508C spectrophotometer. In the case of spotty staining, the darkest area is measured.

Calculation of luminance differences is done according to the following equations:

$$Y\ difference = Y\ unsoiled - Y\ 1\ soiled$$

Percentage difference to unsoiled fabric:

$$Y\% = Y\ difference/\ Y\ unsoiled$$

In the materials of the invention the background material will preferably have a luminance greater than Y = 60. The clothing will have a luminance greater than 35 or greater than 20.

Water resistance

Measurement of the water resistance is carried out in accordance is resistant to with International Standard ISO 811. Preferably the functional layer water pressure up to 0.13 bar.

The luminance of the background material is preferably greater than Y = 60 for bright yellow fabrics, preferably greater than Y = 35 for bright orange fabrics and preferably greater than Y= 20 for bright red fabrics in order to meet the requirements for the European Standard EN471.

The clothing manufactured from the fabric has a luminance difference of less than 15% between a washed unsoiled area and a washed soiling. The soiling was carried out by buffer grease. The washing was carried out by a domestic washing cycle at 60°C in accordance with International Standard ISO 6330/3A, E. Preferably the luminance difference of less than 15% is maintained after thirty domestic washing cycles. For fluorescent yellow fabrics a luminance difference of less than Y = 15 is present after soiling with buffer grease and a domestic washing cycle at 60°C in accordance with International Standard ISO 6330/3A,E. For the same domestic washing cycle, a luminance difference of less than Y = 7 is present for fluorescent orange fabrics and of less than Y = 5 for fluorescent red fabrics.

Preferably these luminance differences are also maintained after thirty domestic washing cycles.

Without intending to limit the scope of the present invention, the foregoing illustrates how the present invention may be made and used.

While particular embodiments of the present invention have been illustrated and described herein, the present invention should not be limited to such illustrations and descriptions. It should be apparent that changes and modifications may be incorporated and embodied as part of the present invention within the scope of the following claims.

**Claims**

1.  Clothing with durable soil resistance as a result of combined soil repellency and soil release properties after use and washing, being made at least partially from a fabric,
    said fabric, combined with a brightly coloured background material, possessing a colour meeting the requirements of European Standard No. EN 471, and
    said fabric comprised of yarn in which the yarns are substantially entirely coated with a silicone coating, but in which the silicone coating does not completely fill interstices between the yarns.

2.  The clothing of claim 1 wherein the interstices between the yarns form openings in between the coated yarns with a width of 100 - 1000 μm, leading to an air permeability for the fabric of more than 500 l/m$^2$/s.

3.  The clothing of claim 1 wherein the background material is printed with a printing material in a pattern.

4.  The clothing of claim 3 wherein the printing material is a silicone.

5.  The clothing of claim 3 wherein the pattern consists of dots or a grit.

6.  The clothing of claim 1 wherein the background material comprises a windproof and water-vapor-permeable functional layer.

7.  The clothing of claim 1 wherein the background material comprises a windproof, waterproof and water-vapor-permeable functional layer.

8.  The clothing of claim 6 or 7 wherein the functional layer is a film or membrane.

9.  The clothing of claim 6 or 7 wherein the functional layer is selected from the group of materials consisting of polyolefins, polyesters, polyvinyl chloride, polyvinylidene chloride, polyurethanes or a fluoropolymer.

10. The clothing of claim 6 or 7 wherein at least one part of the functional layer consists of ePTFE (expanded polytetrafluoroethylene).

11. The clothing of claim 1 in the form of a pant, jacket, hat or glove.

12. The clothing of claim 6 or 7 wherein the gross construction has an FIH-BPI 1.4 water vapor transmission rate of more than 3000g/m$^2$/24h.

13. The clothing of claim 6 or 7 wherein the functional layer is resistant to a water pressure up to 0.13 bar according to ISO 811.

14. The clothing of claim 6 or 7 wherein the ISO 9237 air permeability of the gross construction is not more than 10 l/m$^2$/s.

15. The clothing of claim 1 fulfilling the requirements of EN 471 for fluorescent yellow fabrics.

16. The clothing of claim 1 fulfilling the requirements of EN 471 for fluorescent orange fabrics.

17. The clothing of claim 1 fulfilling the requirements of EN 471 for fluorescent red fabrics.

18. The clothing of claim 15 whereby the background material has a luminance of greater than Y = 60

19. The clothing of claim 16 whereby the background material has a luminance of greater than Y = 35

20. The clothing of claim 17 whereby the background material has a luminance of greater than Y = 20

21. The clothing of claim 1 wherein the fabric is in the form of a knit or a woven fabric.

22. The clothing of claim 21 wherein the fabric is in the form of a plain-woven fabric.

23. The clothing of claim 1 wherein the yarn is selected from the group consisting of polyolefins, polyamides, polyesters, regenerated cellulose, cellulose acetate, rayons, acetates, acrylics, aramids, glasses, modacrylics, cotton, wool, silk, linen, jute, and mixtures thereof.

24. The clothing of claim 1 wherein the yarn is a non-textured yarn.

25. The clothing of claim 1 wherein the linear density of the yarn is between 80 dtex and 300 dtex.

**26.** The clothing of claim 1 wherein the yarn is twisted.

**27.** The clothing of claim 1 wherein the fabric has a weight of 75-350 g/m$^2$.

**28.** The clothing of claim 1 wherein the fabric has a warp and weft yarn count of 10-40 yarns/cm.

**29.** The clothing of claim 1 wherein the interstices have an average width between 150 μm and 250 μm.

**30.** The clothing of claim 1 wherein the air permeability (ISO 9237) of the fabric is higher than 1000 l/m$^2$/s.

**31.** The clothing of claim 1 having an FIH-BPI 1.4 water vapor transmission rate of more than 15,000 g/m$^2$/24h.

**32.** The clothing of claim 1 wherein the fabric contains a dye and the silicone coating is translucent.

**33.** The clothing of claim 1 fulfilling the color of EN471 as a result of the silicone coating being colored.

**34.** The clothing of claim 1 wherein the silicone coating is made of a silicone of the RTV (room temperature vulcanization)-type.

**35.** The clothing of claim 1 wherein the silicone coating is made of a silicone of the LSR (liquid silicone rubber)-type.

**36.** The clothing of claim 1 wherein the silicone coating contains one or several additives.

**37.** The clothing of claim 36 wherein the additives are selected from the group consisting of reflective agents, mildew resistant agents, hand altering agents, viscosity agents, rheology agents, flexibility agents, ultraviolet absorbers, filling agents, electrical conductive agents, thermal conductive agents, flame retardants and radiation reflectivity agents.

**38.** The clothing of claim 1, wherein said clothing after soiling with buffer grease and subsequent domestic washing at 60°C to ISO 6330/3A,E has a luminance difference of less than 15 % between a washed unsoiled area and a washed soiling.

**39.** The clothing of claim 38 conforming thereto after 30 domestic washes at 60°C to ISO 6330/3A,E.

**40.** The clothing of claim 1, wherein said clothing possesses a fluorescent color and after soiling with buffer grease and subsequent domestic washing at 60°C to ISO 6330/3A,E has a luminance difference of less than Y = 15 in the case of fluorescent yellow, less than Y = 7 in the case of fluorescent orange and less than Y = 5 in the case of fluorescent red between a washed unsoiled area and a washed soiling.

**41.** The clothing of claim 40 conforming thereto after 30 domestic washes at 60°C to ISO 6330/3A,E.

**42.** The clothing of claim 1, wherein the fabric achieves a bead-off effect rating of at least 3 or better after 10 min Bundesmann rain test to ISO 9865.

**43.** The clothing of claim 1, wherein the fabric achieves a bead-off effect rating of at least 3 or better after 30 domestic washes at 60°C to ISO 6330/3A,E and after a subsequent 10 min Bundesmann rain test to ISO 9865.

**44.** The clothing of claim 1, wherein the fabric achieves a water absorption of less than 20% after a 10 min Bundesmann rain test to ISO 9865.

**45.** The clothing of claim 1, wherein the fabric achieves a water absorption of less than 20% after 30 domestic washes at 60°C to ISO 6330/3A,E and after a subsequent 10 min Bundesmann rain test to ISO 9865.

**Patentansprüche**

**1.** Bekleidung mit dauerhafter Anschmutzbeständigkeit als Resultat von kombinierten Schmutzabweis- und Schmutzlöseeigenschaften nach Gebrauch und Waschen, wobei die Bekleidung mindestens zum Teil aus einem Stoff hergestellt ist,
wobei der Stoff in Kombination mit einem leuchtend eingefärbten Hintergrundmaterial eine Farbe besitzt, die die Anforderungen der Europäischen Norm Nr. EN 471 erfüllt, und
wobei der Stoff aus Gammaterial besteht, wobei die Fäden im Wesentlichen vollständig mit einer Silikonbeschichtung beschichtet sind, jedoch die Silikonbeschichtung die Zwischenräume zwischen den Fäden nicht vollständig ausfüllt.

**2.** Bekleidung nach Anspruch 1,
wobei die Zwischenräume zwischen den Fäden Öffnungen zwischen den beschichteten Fäden mit einer Breite von 100 - 1000 μm bilden, die zu einer Luftdurchlässigkeit für den Stoff von mehr als 500 l/m$^2$/s führen.

**3.** Bekleidung nach Anspruch 1,
wobei das Hintergrundmaterial mit einem Druckmaterial in einem Muster bedruckt ist.

**4.** Bekleidung nach Anspruch 3,
wobei das Druckmaterial ein Silikon ist.

**5.** Bekleidung nach Anspruch 3,
wobei das Muster aus Punkten oder einem Gitter besteht.

**6.** Bekleidung nach Anspruch 1,
wobei das Hintergrundmaterial eine winddichte und wasserdampfdurchlässige Funktionsschicht aufweist.

**7.** Bekleidung nach Anspruch 1,
wobei das Hintergrundmaterial eine winddichte, wasserdichte und wasserdampfdurchlässige Funktionsschicht aufweist.

**8.** Bekleidung nach Anspruch 6 oder 7,
wobei die Funktionsschicht eine Folie oder Membran ist.

**9.** Bekleidung nach Anspruch 6 oder 7,
wobei die Funktionsschicht ausgewählt ist aus der Materialgruppe bestehend aus Polyolefinen, Polyestern, Polyvinylchlorid, Polyvinylidenchlorid, Polyurethanen oder einem Fluorpolymer.

**10.** Bekleidung nach Anspruch 6 oder 7,
wobei mindestens ein Teil der Funktionsschicht aus ePTFE (gerecktem Polytetrafluorethylen) besteht.

**11.** Bekleidung nach Anspruch 1 in Form einer Hose, einer Jacke, einer Kopfbedeckung oder eines Handschuhs.

**12.** Bekleidung nach Anspruch 6 oder 7,
wobei die Gesamtkonstruktion eine Wasserdampf-Durchlässigkeitsrate nach FIH-BPI 1.4 von mehr als 3000 g/m$^2$/24h aufweist.

**13.** Bekleidung nach Anspruch 6 oder 7,
wobei die Funktionsschicht eine Wasserdruckbeständigkeit von bis zu 0,13 bar nach ISO 811 aufweist.

**14.** Bekleidung nach Anspruch 6 oder 7,
wobei die Luftdurchlässigkeit der Gesamtkonstruktion nach ISO 9237 nicht mehr als 10 l/m$^2$/s beträgt.

**15.** Bekleidung nach Anspruch 1,
die die Anforderungen der EN 471 für fluoreszierende gelbe Stoffe erfüllt.

**16.** Bekleidung nach Anspruch 1,
die die Anforderungen der EN 471 für fluoreszierende orange Stoffe erfüllt.

**17.** Bekleidung nach Anspruch 1,
die die Anforderungen der EN 471 für fluoreszierende rote Stoffe erfüllt.

**18.** Bekleidung nach Anspruch 15,
wobei das Hintergrundmaterial eine Leuchtkraft von größer als Y = 60 aufweist.

**19.** Bekleidung nach Anspruch 16,
wobei das Hintergrundmaterial eine Leuchtkraft von größer als Y = 35 aufweist.

**20.** Bekleidung nach Anspruch 17,
wobei das Hintergrundmaterial eine Leuchtkraft von größer als Y = 20 aufweist.

**21.** Bekleidung nach Anspruch 1,
wobei der Stoff in Form eines Gewirkes oder eines Gewebes vorliegt.

**22.** Bekleidung nach Anspruch 21,
wobei der Stoff in Form eines Gewebes in Leinwandbindung vorliegt.

**23.** Bekleidung nach Anspruch 1,
wobei das Garnmaterial ausgewählt ist aus der Gruppe bestehend aus Polyolefinen, Polyamiden, Polyestern, regenerierter Zellulose, Zelluloseazetat, Rayons, Azetaten, Acrylen, Aramiden, Glasmaterialien, Modacrylen, Baumwolle, Wolle, Seide, Leinen, Jute und Mischungen davon.

**24.** Bekleidung nach Anspruch 1,
wobei das Garnmaterial ein nicht texturiertes Garnmaterial ist.

**25.** Bekleidung nach Anspruch 1,
wobei die lineare Dichte des Garnmaterials zwischen 80 dtex und 300 dtex beträgt.

**26.** Bekleidung nach Anspruch 1,
wobei das Garnmaterial gezwirnt ist.

**27.** Bekleidung nach Anspruch 1,
wobei der Stoff ein Gewicht von 75 - 350 g/m$^2$ aufweist.

**28.** Bekleidung nach Anspruch 1,
wobei der Stoff eine Ketten- und Schußfadenanzahl von 10 - 40 Fäden/cm aufweist.

**29.** Bekleidung nach Anspruch 1,
wobei die Zwischenräume eine durchschnittliche Breite zwischen 150 μm and 250 μm aufweisen.

**30.** Bekleidung nach Anspruch 1,
wobei die Luftdurchlässigkeit (ISO 9237) des Stoffs höher ist als 1000 l/m$^2$/s.

**31.** Bekleidung nach Anspruch 1,
mit einer Wasserdampf-Durchlässigkeitsrate nach FIH-BPI 1.4 von mehr als 15.000 g/m$^2$/24h.

**32.** Bekleidung nach Anspruch 1,
wobei der Stoff einen Farbstoff enthält und die Silikonbeschichtung lichtdurchlässig ist.

**33.** Bekleidung nach Anspruch 1,
die die Farbe nach EN 471 als Ergebnis davon erfüllt, dass die Silikonbeschichtung farbig ist.

**34.** Beschichtung nach Anspruch 1,
wobei die Silikonbeschichtung aus einem Silikon des RTV (room temperature vulcanization bzw. bei Raumtemperatur vulkanisierenden) Typs gebildet ist.

**35.** Beschichtung nach Anspruch 1,
wobei die Silikonbeschichtung aus einem Silikon des LSR (liquid silicone rubber bzw. Flüssigsilikongummi)-Typs gebildet ist.

**36.** Bekleidung nach Anspruch 1,
wobei die Silikonbeschichtung einen oder mehrere Zusatzstoffe enthält.

**37.** Bekleidung nach Anspruch 36,
wobei die Zusatzstoffe ausgewählt sind aus der Gruppe bestehend aus reflektierenden Stoffen, gegen Mehltau beständigen Stoffen, sich in der Hand ändernden Stoffen, Viskositäts-Stoffen, Rheologie-Stoffen, Flexibilitäts-Stoffen, UV-Absorbem, Füllstoffen, elektrisch leitfähigen Stoffen, wärmeleitfähigen Stoffen, flammverzögernden Stoffen und Stoffen mit Strahlungsreflexionsvermögen.

**38.** Bekleidung nach Anspruch 1,
wobei die Bekleidung nach einer Verschmutzung mit Puffer-Fett und anschließendem häuslichen Waschen bei 60 °C nach ISO 6330/3A,E eine Leuchtkraft-Differenz von weniger als 15 % zwischen einem gewaschenen unverschmutzten Bereich und einer gewaschenen Verschmutzung aufweist.

**39.** Bekleidung nach Anspruch 38,
die diesem nach 30 häuslichen Waschvorgängen bei 60 °C nach ISO 6330/3A,E entspricht.

**40.** Bekleidung nach Anspruch 1,
wobei die Bekleidung eine fluoreszierende Farbe aufweist und nach einer Verschmutzung mit Puffer-Fett und anschließendem häuslichen Waschen bei 60 °C nach ISO 6330/3A,E eine Leuchtkraft-Differenz von weniger als Y = 15 im Fall von fluoreszierendem Gelb, weniger als Y = 7 im Fall von fluoreszierendem Orange und weniger als Y = 5 im Fall von fluoreszierendem Rot zwischen einem gewaschenen unverschmutzten Bereich und einer gewaschenen Verschmutzung aufweist.

**41.** Bekleidung nach Anspruch 40,
die diesem nach 30 häuslichen Waschvorgängen bei 60 °C nach ISO 6330/3A,E entspricht.

**42.** Bekleidung nach Anspruch 1,
wobei der Stoff eine Abperleffekt-Kiassifizierung von mindestens 3 oder besser nach einem zehnminütigen Bundesmann-Regentest nach ISO 9865 erreicht.

**43.** Bekleidung nach Anspruch 1,
wobei der Stoff eine Abperleffekt-Klassifizierung von mindestens 3 oder besser nach 30 häuslichen Waschvorgängen bei 60 °C nach ISO 6330/3A,E und nach einem anschließenden zehnminütigen Bundesmann-Regentest nach ISO 9865 erreicht.

**44.** Bekleidung nach Anspruch 1,
wobei der Stoff eine Wasseraufnahme von weniger also 20 % nach einem zehnminütigen Bundesmann-Regentest nach ISO 9865 erreicht.

**45.** Bekleidung nach Anspruch 1,
wobei der Stoff eine Wasseraufnahme von weniger als 20 % nach 30 häuslichen Waschvorgängen bei 60 °C nach ISO 6330/3A,E und nach einem anschließenden zehnminütigen Bundesmann-Regentest nach ISO 9865 erreicht.

## Revendications

**1.** Vêtement avec une résistance aux salissures durable résultant des propriétés combinées de répulsion des salissures et d'élimination des salissures après utilisation et lavage, constitué au moins partiellement d'un tissu, ledit tissu, combiné avec un matériau d'arrière-plan coloré brillant, possédant une couleur répondant aux exigences de la norme Européenne EN 471, et ledit tissu comprenant des fils dans lequel les fils sont sensiblement revêtus complètement par un revêtement de silicone, mais dans lequel le revêtement de silicone ne remplit pas complètement les interstices entre les fils.

**2.** Vêtement selon la revendication 1, dans lequel les interstices entre les fils forment des ouvertures entre les fils revêtus avec une largeur de 100 - 1000 µm, conduisant à une perméabilité à l'air du tissu de plus de 500 l/m$^2$/s.

**3.** Vêtement selon la revendication 1, dans lequel le matériau d'arrière-plan est imprimé avec un matériau d'impression selon un motif.

**4.** Vêtement selon la revendication 3, dans lequel le matériau d'impression est une silicone.

5. Vêtement selon la revendication 3, dans lequel le motif est constitué de points ou d'une grille.

6. Vêtement selon la revendication 1, dans lequel le matériau d'arrière-plan comprend une couche fonctionnelle imperméable au vent et perméable à la vapeur d'eau.

7. Vêtement selon la revendication 1, dans lequel le matériau d'arrière-plan comprend une couche fonctionnelle imperméable au vent, imperméable à l'eau et perméable à la vapeur d'eau.

8. Vêtement selon la revendication 6 ou 7, dans lequel la couche fonctionnelle est une pellicule ou une membrane.

9. Vêtement selon la revendication 6 ou 7, dans lequel la couche fonctionnelle est choisie dans le groupe de matériaux constitué par des polyoléfines, des polyesters, le chlorure de polyvinyle, le chlorure de polyvinylidène, des polyuréthanes ou un polymère fluoré.

10. Vêtement selon la revendication 6 ou 7, dans lequel au moins une partie de la couche fonctionnelle est constituée de PTFE (polytétrafluoroéthylène expansé).

11. Vêtement selon la revendication 1, sous forme d'un pantalon, d'une veste, d'un chapeau ou d'un gant

12. Vêtement selon la revendication 6 ou 7, dans lequel la construction d'ensemble a un taux de transmission de vapeur d'eau FIH-BPI 1,4 de plus de 3000 g/m$^2$/24 h.

13. Vêtement selon la revendication 6 ou 7, dans lequel la couche fonctionnelle est résistante à une pression d'eau jusqu'à 0,13 bar selon la norme ISO 811.

14. Vêtement selon la revendication 6 ou 7, dans lequel la perméabilité à l'air selon la norme ISO 9237 de la construction d'ensemble n'est pas supérieure à 10 l/m$^2$/s.

15. Vêtement selon la revendication 1, remplissant les exigences de la nonne EN 471 pour des tissus jaunes fluorescents.

16. Vêtement selon la revendication 1, remplissant les exigences de la norme EN 471 pour des tissus oranges fluorescents.

17. Vêtement selon la revendication 1, remplissant les exigences de la norme EN 471 pour des tissus rouges fluorescents.

18. Vêtement selon la revendication 15, dans lequel le matériau d'arrière-plan a une luminance supérieure à Y = 60.

19. Vêtement selon la revendication 16, dans lequel le matériau d'arrière-plan a une luminance supérieure à Y = 35.

20. Vêtement selon la revendication 17, dans lequel le matériau d'arrière-plan a une luminance supérieure à Y = 20.

21. Vêtement selon la revendication 1, dans lequel le tissu est sous d'un forme d'un tissu tricoté ou tissé.

22. Vêtement selon la revendication 21, dans lequel le tissu est sous forme d'un tissu plein tissé.

23. Vêtement selon la revendication 1, dans lequel le fil est choisi dans le groupe constitué par des polyoléfines, polyamides, polyesters, une cellulose régénérée, l'acétate de cellulose, des rayonnes, des acétates, des acryliques, des aramides, des verres, des modacryliques, du coton, de la laine, de la soie, du lin, du jute et leur mélanges.

24. Vêtement selon la revendication 1, dans lequel le fil est un fil non texturé.

25. Vêtement selon la revendication 1, dans lequel la densité linéaire du fil est entre 80 dtex et 300 dtex.

26. Vêtement selon la revendication 1, dans lequel le fil est tordu.

27. Vêtement selon la revendication 1, dans lequel le tissu a un poids de 75 - 350 g/m$^2$.

28. Vêtement selon la revendication 1, dans lequel le tissu a un nombre de fils de chaîne et de trame de 10 - 40 fils/cm.

29. Vêtement selon la revendication 1, dans lequel les interstices ont une largeur moyenne entre 150 μm et 250 μm.

30. Vêtement selon la revendication 1, dans lequel la perméabilité à l'air (ISO 9237) du tissu est supérieure à 1000 l/m$^2$/s.

31. Vêtement selon la revendication 1, ayant un taux de transmission de vapeur d'eau FIH-BPI 1,4 supérieure à 15 000 g/m$^2$/24h.

32. Vêtement selon la revendication 1, dans lequel le tissu contient un colorant et le revêtement de silicone est translucide.

**33.** Vêtement selon la revendication 1, répondant à la norme de couleur EN 471 résultant du revêtement de silicone qui est coloré.

**34.** Vêtement selon la revendication 1, dans lequel le revêtement de silicone est constitué d'une silicone de type RTV (Vulcanisation à température ambiante).

**35.** Vêtement selon la revendication 1, dans lequel le revêtement de silicone est constitué d'une silicone de type LSR (caoutchouc de silicone liquide).

**36.** Vêtement selon la revendication 1, dans lequel le revêtement de silicone contient un ou plusieurs additifs.

**37.** Vêtement selon la revendication 36, dans lequel les additifs sont choisis dans le groupe constitué par des agents réfléchissants, des agents résistants aux moisissures, des agents modifiant le toucher, des agents de viscosité, des agents de rhéologie, des agents de flexibilité, des agents absorbants les ultraviolets, des agents de remplissage, des agents conducteurs d'électricité, des agents conducteurs thermiques, des retardateurs de flamme et de agents de réflexion de radiation.

**38.** Vêtement selon la revendication 1, dans lequel ledit vêtement après salissure par une graisse de polissage et lavage domestique postérieur à 60°C selon la norme ISO 6330/3A,E a une différence de luminance inférieure à 15% entre une zone non salie lavée et une zone salie lavée.

**39.** Vêtement selon la revendication 38 répondant après 30 lavages domestiques à 60°C à la norme ISO 6330/3A,E.

**40.** Vêtement selon la revendication1, dans lequel ledit vêtement possède une couleur fluorescente et après salissure avec une graisse de polissage et un lavage domestique postérieur à 60°C selon la norme ISO 6330/3A,E présente une différence de luminance inférieure Y = 15 dans le cas du jaune fluorescent, inférieure à Y =7 dans le cas de l'orange fluorescent et inférieure à Y = 5 dans le cas du rouge fluorescent entre une zone non salie lavée et une zone salie lavée.

**41.** Vêtement selon la revendication 40, répondant après 30 lavages domestiques à 60°C à la norme ISO 6330/3A, E.

**42.** Vêtement selon la revendication 1, dans lequel le tissu possède un taux d'effet de suintement d'au moins 3 ou mieux après 10 minutes du test de pluie Bundesmann selon la norme ISO 9865.

**43.** Vêtement selon la revendication 1, dans lequel le vêtement présente un taux d'effet de suintement d'au moins 3 ou mieux après 30 lavages domestiques à 60°C selon la norme ISO 6330/3A,E, et après 10 minutes d'un test de pluie Bundesmann selon la norme ISO 9865.

**44.** Vêtement selon la revendication 1, dans lequel le vêtement possède une absorption d'eau inférieure à 20% après 10 minutes du test de pluie Bundesmann selon la norme ISO 9865.

**45.** Vêtement selon la revendication 1, dans lequel le vêtement possède une absorption d'eau inférieure à 20% après 30 lavages domestiques à 60°C selon la norme ISO 6330/3A,E, et après un test de pluie Bundesmann postérieur pendant 10 minutes selon la norme ISO 9865.

EP 1 143 062 B1

FIGURE 1

12

# <u>Coating Process of the</u>

Fabric - 20

Coating Material - 22

26

Chrome Roller 21

Chrome Roller 28

Oven 24

Gap between Chrome rolls 50-100μm

Figure: 2

EP 1 143 062 B1

**FIGURE 3**